# EUROPÄISCHE PATENTANMELDUNG

(11) **EP 3 522 481 A1**
(43) Veröffentlichungstag der Anmeldung: **07.08.2019**
(21) Anmeldenummer: 18182351.9
(22) Anmeldetag: 09.07.2018
(51) Int. Cl.: H04L 29/06, H04L 29/08

(54) **VERFAHREN ZUR DATEN-KOMMUNIKATION IN EINEM INSBESONDERE INDUSTRIELLEN NETZWERK, STEUERUNGSVERFAHREN, VORRICHTUNG, COMPUTERPROGRAMM UND COMPUTERLESBARES MEDIUM**

(30) Priorität: 31.01.2018 EP 18154319
(71) Anmelder: Siemens Aktiengesellschaft, 80333 München (DE)
(72) Erfinder: Fischer, Thomas, 91058 Erlangen (DE); Höme, Stephan, 91126 Schwabach (DE); Jung, Konstantin, 90537 Feucht (DE); Kerschbaum, Sven, 90768 Fürth (DE); Kießling, Marcel, 91235 Velden (DE); Volkmann, Frank, 90475 Nürnberg (DE)

(57) **Zusammenfassung**

Die Erfindung betrifft ein Verfahren zur Daten-Kommunikation in einem insbesondere industriellen Netzwerk, bei dem zwischen wenigstens zwei Stream-Teilnehmern (1, 4) ein Stream (6) eingerichtet wird, wobei an einem oder mehreren zwischen den wenigstens zwei Stream-Teilnehmern (1, 4) liegenden Knotenpunkten, insbesondere Bridges (2) und/oder Switches, Ressourcen reserviert und anschließend Daten zwischen den wenigstens zwei Stream-Teilnehmern (1, 4) über den Stream (6) übertragen werden, wobei wenigstens ein Teilnehmer (4) des Streams (6) das Senden und/oder Empfangen von Daten über den Stream (6) unterbricht und Ressourcen, die für den wenigstens einen Teilnehmer (4) des Streams (6) an einem oder mehreren Knotenpunkten (2) reservierten sind, zur Nutzung für eine Datenübertragung, der eine niedrigere Priorität als der Datenübertragung über den Stream (6) zukommt, freigegeben werden, wobei die Reservierung der Ressourcen für den wenigstens einen Teilnehmer (4) aufrecht erhalten wird. Darüber hinaus betrifft die Erfindung ein Steuerungsverfahren, eine Vorrichtung, ein Computerprogramm sowie ein computerlesbares Medium.

## Beschreibung

Die Erfindung betrifft ein Verfahren zur Daten-Kommunikation in einem insbesondere industriellen Netzwerk, bei dem zwischen wenigstens zwei Stream-Teilnehmern ein Stream eingerichtet wird, wobei an einem oder mehreren zwischen den wenigstens zwei Stream-Teilnehmern liegenden Knotenpunkten, insbesondere Bridges und/oder Switches, Ressourcen reserviert und anschließend Daten zwischen den wenigstens zwei Stream-Teilnehmern über den Stream übertragen werden. Darüber hinaus betrifft die Erfindung ein Steuerungsverfahren, eine Vorrichtung, ein Computerprogramm sowie ein computerlesbares Medium.

Time Sensitive Networking (TSN) bezeichnet eine Reihe von Standards, die den Bridging Standard IEEE 802.1Q um Mechanismen zur Übertragung echtzeitkritischer Daten über Ethernet-Netze erweitert. Zu den genannten Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Mit dem Time Sensitive Networking ist ein Standard definiert, der die Qualität (Quality of Service - QoS oder auch Dienstgüte) in einem Netzwerk in Form von Streams garantiert. Ein Stream stellt eine in der Regel unidirektionale geschützte Kommunikationsverbindung von einer Quelle (Talker) zu einem oder mehreren Senken (Listener) dar.

"Multiple Listeners per Stream" wurde in AVB eingeführt, um die Anzahl von Echtzeit-Datenflüssen (IEEE802 nennt diese "Stream") von einer Quelle (Talker) zu mehreren Zielen (Listenern) zu reduzieren. Konkret wird die Datenübertragung von einem Talker an mehrere Listener über nur einen Stream ermöglicht.

In der ebenfalls auf die Anmelderin zurückgehenden europäischen Patentanmeldung mit dem Aktenzeichen EP 18154319.0 ist ferner ein Stream-Reservierungs-Modell offenbart, welches "Multiple Talker per Listener" ermöglicht, konkret die Übertragung von Daten von mehreren Talkern an einen Listener über nur einen Stream.

Vor der eigentlichen Datenübertragung via Stream erfolgt eine Pfadberechnung und eine Registrierung und Reservierung, um von dem Netzwerk Garantien für einen verlustfreien insbesondere Echt-Zeit-Transfer von Datenframes und eine pünktliche Lieferung zu erhalten. Das Netzwerk muss dafür die Verfügbarkeit von Netzwerkressourcen (beispielsweise Adresstabelleneinträge Framebuffer, transmit time slices) verifizieren und Ressourcen - sofern verfügbar - zuweisen, dies für jeden Echtzeit-Datenfluss, also Stream, und es muss Zugang für Echtzeit-Datenverkehr gewähren.

Innerhalb des Netzwerkes muss die Kontrollinformation über Registrierungen, Reservierungen und Weiterleite-Informationen für jeden Stream gespeichert werden. Der Status von jeder Reservierung muss aufrechterhalten werden. Mit einer zunehmenden Anzahl von Endgeräten und ihrem Datenverkehr, insbesondere Echtzeit-Datenverkehr, in demselben Netzwerk wächst die Menge von Netzwerkkontrollinformationen an. Da die Speicher- und Verarbeitungsleistung von Netzwerkknotenpunkten, beispielsweise Brigdes oder Switches, begrenzt ist, stellt dies mitunter ein Skalierungsproblem dar.

Es kann es vorkommen, dass einer oder mehrere Netzwerkteilnehmer, beispielsweise Controller, Sensoren und/oder Aktoren bzw. solche umfassende Geräte, vorübergehend vom Netz genommen oder deaktiviert werden. Dies kann beispielsweise auf eine Wartung und/oder einen zu behebenden Defekt zurückzuführen sein.

In diesem Fall wird eine Kommunikation temporär nicht mehr benötigt, da entweder ein Gerät, das einen Talker eines Streams darstellt, nicht mehr sendet und/oder ein Gerät, welches einen Listener eines Streams bildet, Daten nicht mehr abnehmen kann, so dass ein Senden an dieses vorübergehend nicht erforderlich bzw. möglich ist. In einem solchen Fall bleibt nach Kenntnisstand der Anmelderin die Reservierung der Bandbreite auf dem zugehörigen Netzwerkpfad entweder erhalten und die Bandbreite wird nicht anderweitig genutzt, was zu einem Ausbremsen des gesamten Netzwerkes führt. Eine der Anmelderin bekannte Alternative besteht darin, dass der Stream mit der kompletten Konfiguration gelöscht wird, wodurch die reservierten Ressourcen wieder verfügbar werden. Wird eine vorübergehend entfernter Netzwerkteilnehmer wieder verbunden, muss eine komplett neue Konfiguration erfolgen, und eine rückwirkungsfreie Wiederinbetriebnahme kann nicht garantiert werden.

Ausgehend davon ist es eine Aufgabe der vorliegenden Erfindung, ein Verfahren der eingangs genannten Art anzugeben, welches eine optimale Nutzung von Netzwerkressourcen insbesondere auch in dem Falle bietet, dass an einen oder mehrere Stream-Teilnehmer vorrübergehend keine Daten gesendet und/oder von diesem oder diesen vorübergehend keine Daten empfangen werden.

Diese Aufgabe wird bei einem Verfahren der eingangs genannten Art dadurch gelöst, dass wenigstens ein Teilnehmer des Streams das Senden und/oder Empfangen von Daten über den Stream unterbricht und Ressourcen, die für den wenigstens einen Teilnehmer des Streams an einem oder mehreren Knotenpunkten reservierten sind, zur Nutzung für eine Datenübertragung, der eine niedrigere Priorität als der Datenübertragung über den Stream zukommt, freigegeben werden, wobei die Reservierung der Ressourcen für den wenigstens einen Teilnehmer aufrecht erhalten wird.

Die Grundidee der vorliegenden Erfindung besteht mit anderen Worten darin, einen "Sleep Mode" für Streams einzuführen und für den Fall, dass wenigstens ein Stream-Teilnehmer vorübergehend keine Daten senden und/oder empfangen will bzw. kann, die für diesen reservierten Ressourcen temporär zur Nutzung für eine Datenübertragung mit einer niederprioren Kommunikationsklasse zur Verfügung zu stellen. Die Konfigurationseinstellungen des Streams bleiben dabei erfindungsgemäß - auch während der "Fremdnutzung" der Ressourcen - erhalten.

Die erfindungsgemäße Vorgehensweise ermöglicht es dabei, dass reservierte Ressourcen im Anschluss, wenn der wenigstens eine Stream-Teilnehmer wieder Daten senden und/oder empfangen möchte, ohne Verzögerung für den Stream-Verkehr zur Verfügung stehen, unter der Akzeptanz, dass die niederpriore Kommunikation in diesem Moment gestört wird. Dies gilt insbesondere für netzwerkgesteuerte, zyklische Kommunikation, z.B. bei Verwendung von TAS (Time Aware Shaper).

Bei TAS beispielsweise werden die Zeitschlitze exklusiv für die Benutzung durch die Streams reserviert. Eine andere Übertragung kann diese nicht nutzen. Durch das Pausieren werden diese wieder verwendbar. Bei einem Aufwachen eines Stream-Teilnehmers, beispielsweise eines Talkers, kann dieser dann die Reservierung neu anstoßen, ein vorhandenes Scheduling wird jedoch nur noch "reaktiviert" und nicht erst neu berechnet. Ein anderer Stream kann die Ressourcen nicht verwenden, da er das Scheduling nicht nutzen darf. Best Effort Verkehr (solcher mit "niedrigere Priorität") kann jedoch im "Sleep" Zustand die Zeitschlitze nutzen, solange, bis die Stream-Anmeldung wieder aktiviert wird.

Nach einer Pause eines Netzwerkteilnehmers, die beispielsweise in einem Entfern und/oder Deaktivieren eines Teilnehmers begründet sein und beispielsweise im Minuten- oder StundenBereich liegen kann, kann dann quasi sofort, insbesondere nach einer oder einigen Millisekunden, die für eine "Re-Aktivierung" der Ressourcen erforderlich sein kann bzw. können, wieder ein Datenaustausch stattfinden. Eine komplette Neuberechnung eines Schedulings hingegen würde Minuten, bei komplexeren Netzwerken ggf. Stunden in Anspruch nehmen.

Bevorzugt werden alle Ressourcen, welche für den wenigstens einen Stream-Teilnehmer, welcher das Senden und/oder Empfangen von Daten vorübergehend unterbricht, reserviert sind, dem Netz für niederpriore Kommunikation zur Verfügung gestellt.

Die freigegebenen Ressourcen können von wenigstens einem weiteren Teilnehmer des Netzwerkes für eine Datenübertragung, der eine niedrigere Priorität als der Datenübertragung über den Stream zukommt, genutzt werden.

Für den Erhalt einer oder mehrerer geschützten Verbindungen, also eines oder mehrerer Streams, werden in an sich bekannter Weise vor der eigentlichen Übertragung der Daten Ressourcen in dem oder den Knotenpunkten, über welche die Datenübertragung zu erfolgen hat, reserviert, was unter Verwendung eines Reservierungsprotokolls möglich ist.

Durch die Verwendung eines Reservierungsprotokolls für den Echtzeit-Fluss wird die komplexe Konfiguration automatisch im Netzwerk durchgeführt, wobei die jeweils vorliegende Topologie genutzt wird. Bei Ressourcen, insbesondere Netzwerkressourcen, die für eine Übertragung via Stream reserviert werden, kann es sich beispielsweise um Adresstabelleneinträge und/oder Framebuffer und/oder transmit time slices und/oder Bandbreite und/oder Jitter und/oder Latenz handeln.

Die erfindungsgemäße Aufrechterhaltung der Reservierung im Anschluss an eine Unterbrechung bzw. einem Pausieren einer Datenübertragung von und/oder zu wenigstens einem Stream-Teilnehmer kann beispielsweise erzielt werden, indem zu der Reservierung gehörige Konfigurationsdaten bzw. Konfigurationseinstellungen in einem oder mehreren, bevorzugt allen Knotenpunkten, über welche Daten über den Stream übertragen werden bzw. zu übertragen sind, gespeichert bleiben, auch wenn die Datenübertragung von bzw. zu einem Stream-Teilnehmer vorübergehend aussetzt. Bei den Konfigurationsdaten bzw. -einstellungen, die gespeichert bleiben, kann es sich beispielsweise um einen Adresseintrag in der FDB, die Verwaltung der der für Echtzeitdaten verwendeten Queue-Speicher und/oder eine Konfiguration des Shapers und/oder TAS-Mechanismus handeln.

Bisher wird die Stream-Beschreibung (insbesondere Stream-ID, Frame-Größe, Anzahl an Frames pro Intervall, benutzte Weiterleiteadresse) periodisch aktualisiert. Beim Ausfall eines Links (beispielsweise aufgrund eines Entfernens und/oder Deaktivierens eines Talkers) werden die von diesem Gerät empfangenen Werte umgehend gelöscht.

Die Übertragung von Daten via Stream erfolgt bevorzugt in einem TSN-Netzwerk. Unter einem TSN-Netzwerk ist dabei ein solches zu verstehen, welches einem oder mehreren als Time Sensitive Networking (TSN) bezeichneten Standards genügt, insbesondere einen oder mehrere TSN-fähige Knotenpunkte, etwa Switches und/oder Bridges, umfasst. Zu den TSN-Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards. Prinzipiell ist es auch möglich, dass die Übertragung von Daten via Stream in einem Netzwerk erfolgt, welches (nur) AVB-Standards genügt, insbesondere IEEE802.1AS, IEEE802.1Qat, IEEE802.1Qav und/oder IEEE802.1BA.

Erfindungsgemäß kann der wenigstens eine Teilnehmer des Streams im Anschluss daran, dass er das Senden und/oder Empfangen von Daten über den Stream unterbrochen hat, das Senden und/oder Empfangen von Daten über den Stream unter Nutzung der für ihn reservierten Ressourcen fortführen, wobei eine etwaige Datenübertragung mit einer niedrigeren Priorität unter Nutzung der für den wenigstens einen Teilnehmer des Streams reservierten Ressourcen beendet wird.

Insbesondere wird der wenigstens eine Teilnehmer des Streams das Senden und/oder Empfangen von Daten über den Stream fortführen ohne dass die Reservierung von Ressourcen für den Stream neu berechnet und/oder neu durchgeführt wird.

Es kann sein, dass der wenigstens eine Teilnehmer des Streams deaktiviert wird und insbesondere aufgrund der Deaktivierung von dem wenigstens einen Teilnehmer des Streams keine Daten mehr über den Stream gesendet und/oder empfangen werden. Alternativ oder zusätzlich ist es möglich, dass der wenigstens eine Teilnehmer des Streams von dem Netzwerk getrennt wird und insbesondere aufgrund der Trennung von dem Netzwerk von dem wenigstens einen Teilnehmer des Streams keine Daten mehr über den Stream gesendet und/oder empfangen werden.

Wurde der wenigstens eine Teilnehmer des Streams von dem Netzwerk getrennt, kann er im Anschluss daran wieder mit dem Netzwerk verbunden und dann die Datenübertragung über den Stream fortgesetzt werden. Für den Fall, dass er alternativ oder zusätzlich deaktiviert wurde, kann der wenigstens eine Teilnehmer des Streams im Anschluss daran wieder aktiviert und dann die Datenübertragung über den Stream fortgesetzt werden. In beiden Fällen ermöglicht es die erfindungsgemäße Aufrechterhaltung der Ressourcen-Reservierung eine besonders reibungsfreie und zügige Wiederaufnahme der Stream-Datenübertragung.

Zusätzlich wird garantiert, dass die Ressourcen während der Pause bzw. einer "Ausschalt"-Phase nicht von einem anderen Stream genutzt werden und nach einem Einschalten und/oder erneuten Verbinden somit nicht mehr zur Verfügung stehen würden.

In besonders bevorzugter Weiterbildung der Erfindung ist vorgesehen, dass der wenigstens eine Teilnehmer des Streams vor oder nach oder gleichzeitig zu der Unterbrechung des Sendens und/oder Empfangens von Daten über den Stream eine Sleep-Nachricht sendet und in Reaktion auf die Sleep-Nachricht die Ressourcen, die für den wenigstens einen Teilnehmer des Streams an einem oder mehreren Knotenpunkten reservierten sind, zur Nutzung für eine Datenübertragung, der eine niedrigere Priorität als der Datenübertragung über den Stream zukommt, freigegeben werden.

Die Sleep-Nachricht kann beispielsweise von einer zentralen Stelle ausgelöst werden und an den ersten Knotenpunkt, insbesondere die erste Bridge geschickt werden, oder direkt von einem einen Stream-Teilnehmer bildenden Netzwerkgerät (beispielsweise einem Talker) an das Netzwerk signalisiert werden. Der erste Knotenpunkt, insbesondere die erste Bridge, hält dann die Reservierung für alle folgenden beteiligten Netzwerkkomponenten aufrecht, obwohl der Teilnehmer nicht mehr am Netzwerk anschlossen und/oder ausgeschaltet ist.

Insbesondere über das Senden einer Sleep-Nachricht kann eine vorübergehende Unterbrechung der Datenübertragung an das Netzwerk kommuniziert werden. Auch wird es über die Einführung von Sleep-Nachrichten auf besonders einfache Weise möglich, zwischen nur vorübergehenden Unterbrechungen des Sendens bzw. Empfangens via Stream, etwa aufgrund einer vorübergehenden Deaktivierung bzw. Entfernung eines Teilnehmers zu Wartungszwecken, und einem dauerhaften Beenden der Datenübertragung zu unterscheiden. Im Falle eines dauerhaften Beendens, beispielsweise in dem Fall, dass ein Gerät, welches einen Stream-Teilnehmer bildet, komplett aus dem Netzwerk entfernt wird, muss kein Sleep-Modus gewählt werden, bei dem die Ressourcen-Reservierung aufrecht erhalten wird, sondern die Reservierung kann wieder abgebaut werden.

Alternativ oder zusätzlich zum Senden von Sleep-Nachrichten kann beispielsweise auch eine Zusatzinformation über den Sleep-Modus direkt in der Streambeschreibung ergänzt werden (insbesondere im Reservierungsprotokoll) oder durch eine Konfiguration durch das Management des Reservierungsprotokolls erfolgen. Eine Aktivierung des Sleep-Modus kann dann insbesondere unmittelbar in Reaktion auf eine Unterbrechung des Sendens und/oder Empfanges von Daten von einem Stream-Teilnehmer, und/oder in Reaktion auf ein Trennen eines Stream-Teilnehmers vom Netz und/oder eine Deaktivierung eines Stream-Teilnehmers bevorzugt automatisch erfolgen. Analog kann eine Beendigung des Sleep-Modus insbesondere automatisch in Reaktion darauf erfolgen, dass von dem Stream-Teilnehmer wieder Daten gesendet und/oder empfangen werden, und/oder in Reaktion darauf, dass ein Stream-Teilnehmer wieder mit dem Netz verbunden und/oder aktiviert also eingeschaltet wird.

Weiterhin bevorzugt ist vorgesehen, dass der wenigstens eine Teilnehmer des Streams im Anschluss daran, dass er das Senden und/oder Empfangen von Daten über den Stream unterbrochen hat, eine Wake-Up-Nachricht sendet, und in Reaktion auf die Wake-Up-Nachricht eine etwaige Datenübertragung mit einer niedrigeren Priorität unter Nutzung der für den wenigstens einen Teilnehmer des Streams reservierten Ressourcen innerhalb einer vorgegebenen Zeitspannen beendet wird.

Über die Wake-Up-Nachricht kann das Netzwerk auf einfache Weise darüber informiert werden, dass der wenigstens eine Stream-Teilnehmer wieder eine Datenübertragung wünscht.

Ist die unterbrochene Datenübertragung von und/oder zu dem wenigstens einen Teilnehmers des Streams darauf zurückzuführen, dass er von dem Netzwerk getrennt wurde, wird er die Wake-Up-Nachricht senden, nachdem er wieder mit dem Netzwerk verbunden wurde, insbesondere unmittelbar im Anschluss an die erneute Verbindung.

In gleicher Weise wird er für den Fall, dass er alternativ oder zusätzlich vorübergehend deaktiviert war, die Wake-Up-Nachricht senden, nachdem er wieder aktiviert wurde, insbesondere unmittelbar im Anschluss an die (Re)Aktivierung.

Alternativ oder zusätzlich ist es möglich, dass anstelle der Wake-Up-Nachricht eine reguläre Anmeldung des zuvor durch die Sleep-Nachricht geschützten Streams ausgelöst wird - welche dann die zuvor geschützten Ressourcen verwendet.

Eine weitere Ausführungsform des erfindungsgemäßen Verfahrens zeichnet sich dadurch aus, dass der wenigstens eine Teilnehmer des Streams, wenn er Daten über den Stream sendet und/oder empfängt zusätzlich zyklisch Keep-Alive-Nachrichten sendet. Dann wird der wenigstens eine Teilnehmer des Streams das Senden von Keep-Alive-Nachrichten bevorzugt beenden, wenn er das Senden und/oder Empfangen von Daten über den Stream unterbricht. In dem erfindungsgemäß vorgesehenen Sleep-Modus wird entsprechend das Senden von Keep-Alive Nachrichten zweckmäßiger Weise ausgesetzt.

Bei dem wenigstens einen Teilnehmer des Streams, welcher das Senden und7oder Empfangen von Daten via Stream vorübergehend unterbricht, handelt es sich bevorzugt um eine Komponente einer industriellen Automatisierungsanlage, beispielsweise eine solche, die wenigstens einen Sensor und/oder wenigstens einen Aktor umfasst oder dadurch gebildet wird.

Selbstverständlich können in einem Netzwerk mehrere Teilnehmer vorübergehend das Senden und/oder Empfangen von Daten über einen Stream unterbrechen. Ist dies der Fall, kann nur für einen, für mehrere oder auch alle Stream-Teilnehmer, die davon betroffen sind, der erfindungsgemäße Sleep-Modus aktiviert werden, in dem die Ressourcen, die für den jeweiligen Teilnehmer an einem Stream an einem oder mehreren Knotenpunkten reservierten sind, zur Nutzung für eine Datenübertragung, der eine niedrigere Priorität als der Datenübertragung über den Stream zukommt, freigegeben werden, wobei die Reservierung der Ressourcen für den jeweiligen Teilnehmer aufrecht erhalten wird.

Bei TAS können die Sendezeitfenster in der Regel nur für die Stream Daten genutzt werden - durch den erfindungsgemäßen "Sleep" Modus dann insbesondere auch für z.B. die Best-Effort Klasse. Bei anderen TSN Shapern kann die Übertragung von Best-Effort immer die nicht benötigte Bandbreite verwenden. Eine Reservierung eines neuen Streams kann jedoch nicht die durch den "Sleep" Modus aufrecht erhaltenen, für den Stream benötigten Ressourcen verwenden. Mehrere Stream-Teilnehmer, für welche der erfindungsgemäße Sleep-Modus genutzt wird, können selbstverständlich sowohl Teilnehmer eines, also des gleichen Streams als auch Teilnehmer verschiedener Streams sein.

Gegenstand der vorliegenden Erfindung ist ferner ein Steuerungsverfahren für einen industriellen technischen Prozess oder ein Fahrzeug, bei dem zwischen wenigstens zwei Komponenten einer Automatisierungsanlage Daten unter Durchführung des Verfahrens nach einem der vorhergehenden Ansprüche ausgetauscht werden und auf Basis der ausgetauschten Daten eine Steuerung des industriellen technischen Prozesses oder Fahrzeugs erfolgt.

Ein weiterer Gegenstand der Erfindung ist eine Vorrichtung, die zur Durchführung des erfindungsgemäßen Verfahrens zur Daten-Kommunikation bzw. des erfindungsgemäßen Steuerungsverfahrens ausgebildet und eingerichtet ist, insbesondere umfassend:
- einen oder mehrere Knotenpunkte, insbesondere Bridges und/oder Switches, und
- wenigstens zwei Stream-Teilnehmer bildende Geräte,
   die über einen oder mehrere Knotenpunkte miteinander verbunden sind, wobei die wenigstens zwei Stream-Teilnehmer bildenden Geräte bevorzugt Bestandteile einer industriellen Automatisierungsanlage sind.

Weiterhin betrifft die Erfindung ein Computerprogramm, das Programmcodemittel zur Durchführung der Schritte des erfindungsgemäßen Verfahrens zur Daten-Kommunikation bzw. des erfindungsgemäßen Steuerungsverfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Daten-Kommunikation bzw. des erfindungsgemäßen Steuerungsverfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung einer Ausführungsform des Verfahrens der vorliegenden Erfindung unter Bezugnahme auf die beiliegende Zeichnung deutlich. Darin ist
- FIG 1: eine schematische Teildarstellung eines industriellen Netzwerkes mit mehreren Teilnehmern, wobei zwischen zwei Netzwerk-Teilnehmern Daten über einen Stream ausgetauscht werden;
- FIG 2: das Netzwerk aus FIG 1, wobei einer der beiden Netz-werk-Teilnehmer, die Daten über den Stream ausgetauscht haben, aus dem Netzwerk entfernt wurde;
- FIG 3: das Netzwerk aus FIG 1 und 2, wobei der zuvor entfernet Netzwerk-Teilnehmer wieder mit dem Netzwerk verbunden ist und der Datenaustausch über den Stream fortgeführt wird;
- FIG 4: eine rein schematische Darstellung zu den Abläufen bei Entfernung eines Netzwerk-Teilnehmers, wenn kein erfindungsgemäßer Sleep-Mode vorgesehen ist; und
- FIG 5: eine rein schematische Darstellung zu den Abläufen bei Entfernung und anschließender erneuten Verbindung eines Netzwerk-Teilnehmers, wenn ein erfindungsgemäßer Sleep-Mode vorgesehen ist.

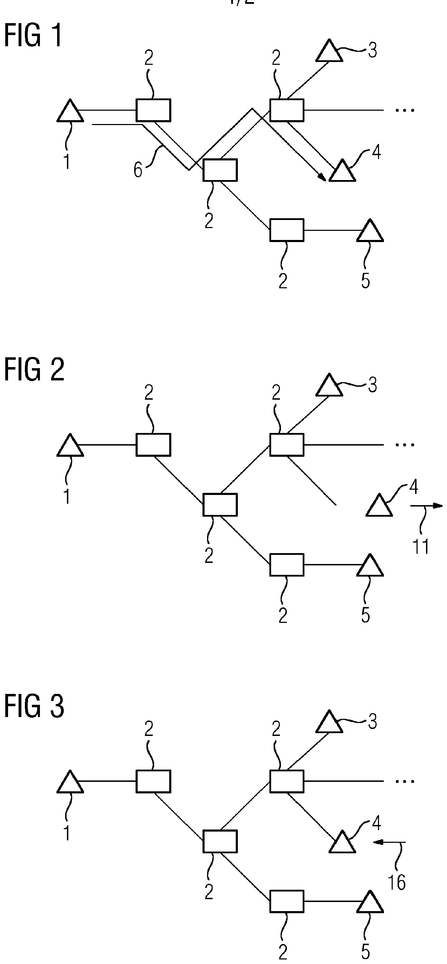

Die FIG 1 zeigt eine rein schematische Teildarstellung eines industriellen Ethernet-basierten Netzwerkes. Konkret ist ein Endgerät zu erkennen, welches einen Sender/Talker 1 darstellt, und das über mehrere Netzwerknotenpunkte in Form von Bridges 2, von denen in der FIG 1 nur vier Stück dargestellt sind, mit einer Mehrzahl von weiteren Endgeräten verbunden ist, die jeweils einen Empfänger/Listener 3, 4, 5 darstellen. Von den Empfängern 3, 4, 5 sind in der FIG 1 drei zu erkennen. Die drei Punkte rechts in der FIG sollen verdeutlichen, dass hinter der Bridge 2 oben rechts weitere Bridges 2 und Endgeräte folgen (können).

Wie man der FIG 1 entnehmen kann, zeichnet sich das Ethernet-basierte Netzwerk mit der Vielzahl von Bridges 2 bei dem dargestellten Ausführungsbeispiel durch eine Baumtopologie aus. Selbstverständlich kann auch eine andere aus dem Stand der Technik bekannte Netzwerktopologie, z.B. eine Linie-, Stern- oder Ring-Topologie, vorgesehen sein.

Bei dem Netzwerk handelt es sich vorliegend um ein TSN-Netzwerk, also ein solches, welches einem oder mehreren als Time Sensitive Networking (TSN) bezeichneten Standards genügt. Insbesondere sind die Knotenpunkte 2 vorliegend durch TSN-fähige Bridges 2 gegeben. Zu den TSN-Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Bei dem den Sender bildenden Endgerät handelt es sich vorliegend um eine SPS 1 einer industriellen Automatisierungsanlage für einen nicht weiter dargestellten technischen Prozess. Die die Empfänger bildenden Endgeräte sind ein Bildschirm 3, auf dem für einen Bediener von der SPS 1 empfangene Daten visualisiert werden können, ein Endgerät 4, welches einen oder mehrere in den Figuren nicht erkennbare Aktoren umfasst, die von der SPS 1 zyklisch Steuersignale benötigen, um auf den industriellen technischen Prozess zyklisch einzuwirken, und ein Analysegerät 5, welches von der SPS 1 Daten erhält und diese analysiert. Auf Basis der zwischen der SPS 1 und dem Gerät 4 ausgetauschten Daten erfolgt eine Steuerung des industriellen technischen Prozesses.

Die Daten werden von der SPS 1 an die drei Endgeräte 3, 4, 5 in Form von Datenframes über das Ethernet-basierte Netzwerk übertragen.

Die Frame-Weiterleitung von der SPS 1 an das Gerät 4 mit den Aktoren erfolgt dabei über eine geschützte Verbindung, einen sogenannten Stream. Die Datenkommunikation über einen Stream, die etwa von dem AVB- sowie TSN-Standard (TSN steht für "Time Sensitive Networking") bekannt ist, stellt insbesondere sicher, dass eine vorgegebene Latenzzeit, die von Stream zu Stream variieren kann, und insbesondere von der jeweiligen Anwendung abhängt, eingehalten wird. Somit wird sichergestellt, dass die Steuersignale binnen einer vorbestimmten maximalen Latenzzeit bei den Aktoren des Endgerätes 4 eintreffen, also zwischen dem Einspeisen der Daten in das Netzwerk seitens der SPS 1 bis zum Eingang der Daten bei den Aktoren eine maximale Latenzzeit vergeht. So kann etwa eine insbesondere Echtzeit-kritische Kommunikation zwischen der SPS 1 und dem Gerät 4 mit den Aktoren sichergestellt werden.

Dabei gilt, dass ein Stream, wie er beispielsweise von der Audio/Video-Bridging (AVB) Taskgroup und insbesondere von der TSN-Taskgroup in der internationalen Norm IEE802.1 festgelegt ist, unter Rückgriff auf ein Stream-Reservierungsprotokoll (vorliegend beispielsweise Stream Reservation Protocol - SRP bzw. die Erweiterung MSRP) eingerichtet wird, wodurch ein Stream zwischen einem Sender und einem Empfänger oder auch ein Stream zwischen einem Sender 1 und mehreren Empfängern erhalten werden kann. Erstere Konfiguration entspricht erkennbar derjenigen aus FIG 1.

Für die Einrichtung eines Streams zwischen der SPS 1 und dem Gerät 4 erfolgt eine Reservierung von Ressourcen an jedem Knotenpunkt 2, welcher Datenframes von der SPS 1 an das Gerät 4 weiterleitet.

Der Ablauf ist dabei derart, dass in einem ersten Schritt von dem Sender, also der SPS 1 eine Talker Advertise Nachricht herausgegeben wird. Mit dieser kündigt die SPS 1 den Stream im Netzwerk an, und es werden die Eigenschaften des Streams beschrieben. Von der SPS 1 werden insbesondere eine Stream-ID, eine Weiterleite-Adresse und eine Bandbreiteninformation für den von ihr abgehenden Datentransfer angegeben.

Die Ankündigung des Streams wird an alle Knotenpunkte, vorliegend also Bridges 2 im Netzwerk verteilt, wobei dann jede Bridge 2 die Information des Empfangsports, also des Ports in Richtung der den Talker bildenden SPS 1, über den die Ankündigung eingegangen ist, und später auch die Daten eingehen werden, führt. Da die Datenquelle auch als Talker 1 bezeichnet wird, trägt dieser Port auch die Bezeichnung Talker-Port. Die Ports in Richtung des/der Listener werden entsprechend auch als Sende- bzw. Listener-Ports bezeichnet.

An dem von der SPS 1 angebotenen Stream können sich einer oder mehrere Listener anmelden. Bei dem dargestellten Ausführungsbeispiel meldet sich nur das Gerät 4 mit den Aktoren an, wobei dies nicht einschränkend zu verstehen ist und es selbstverständlich auch möglich ist, dass sich mehrere Listener anmelden. Von dem Gerät 4 wird eine Listener Join Nachricht in Richtung der SPS 1 gesendet.

An denjenigen Bridges 2, die zwischen der SPS 1 und dem Gerät 4 liegen, wird jeweils eine Reservierung an dem Port in Richtung des Gerätes 4, also dem Listener-Port gemäß der von der den Talker darstellenden SPS 1 angegebenen Streambeschreibung durchgeführt, sofern die verfügbaren Ressourcen an der jeweiligen Bridge 2 ausreichen. Jeder Knotenpunkt 2 prüft, ob seine internen Ressourcen für im Rahmen des einzurichtenden Streams geforderte Performance (insbesondere bezüglich Datenmenge und Datendurchsatz) ausreichen. Ist dies der Fall, reserviert der Knotenpunkt 2 diese Ressourcen für den einzurichtenden Stream und gibt einen positiven Reservierungsstatus an die nachfolgende Bridge 2 weiter, bzw. die letzte Bridge an den Sender, also die SPS 1. Bei dem dargestellten Ausführungsbeispiel liegen auf dem die SPS 1 mit dem Gerät 4 verbindenden Netzwerkpfad insgesamt drei Knotenpunkte, vorliegend Bridges 2 und Ressourcen-Reservierungen erfolgen an diesen drei.

Über die Reservierung kann jeder Knotenpunkt 2 sicherstellen, dass er beim anschließenden Datentransfer die erforderliche Performance gewährleistet. Hierin unterscheiden sich Streams von ungeschützten Verbindungen.
Sind keine ausreichenden Ressourcen verfügbar, wird ein negativer Reservierungsstatus weitergegeben.

Die Reservierung startet dabei an der dem jeweiligen Empfänger/Listener, also dem Gerät 4 nächstliegenden Bridge 2 und "propagiert" entlang des zugehörigen Netzwerkpfades zur Datenquelle/zum Talker, also der SPS 1.

Die Reservierung basiert dabei auf dem auch als Talker-Tree (T_{Tree}) bezeichneten Weiterleite-Baum, der beispielsweise mit dem Rapid Spanning Tree Protocol (RSTP) aufgebaut werden kann.

Im Anschluss an eine erfolgreiche Reservierung werden Datenframes von der SPS 1 zyklisch an das Gerät 4 übertragen. Das Gerät 4 sendet dabei "Keep-Alive-Nachrichten" an den nächsten Knotenpunkt 2 auf dem Netzwerkpfad von dem Gerät 4 zur SPS 1. Dadurch wird die Reservierung aufrecht erhalten. Nach Ablauf des Timers werden nicht bestätigte Reservierungen markiert und nach Ablauf einer Bestätigungszeit (2. Timer) intern gelöscht. Dadurch werden bisher entfernte Geräte erkannt und die Reservierung wird abgebaut und die Ressourcen wieder freigegeben.

Auch an die beiden weiteren Geräte 3, 5 gehen zyklisch Datenframes von der SPS 1, jedoch, da diese die Daten nicht in Echtzeit benötigen, nicht über eine geschützte Verbindung, also nicht via Stream. Für die Datenübertragung an die beiden weiteren Geräte 3, 5 sind daher keine Ressourcen an den Knotenpunkten 2 auf dem Netzwerkpfad zwischen dem jeweiligen Gerät 3, 5 und der SPS 1 reserviert.

In der FIG 1 ist über einen die SPS 1 mit dem Gerät 4 mit den Aktoren verbindenden Pfeil 6 schematisch angedeutet, dass die Datenübertragung via Stream erfolgt.

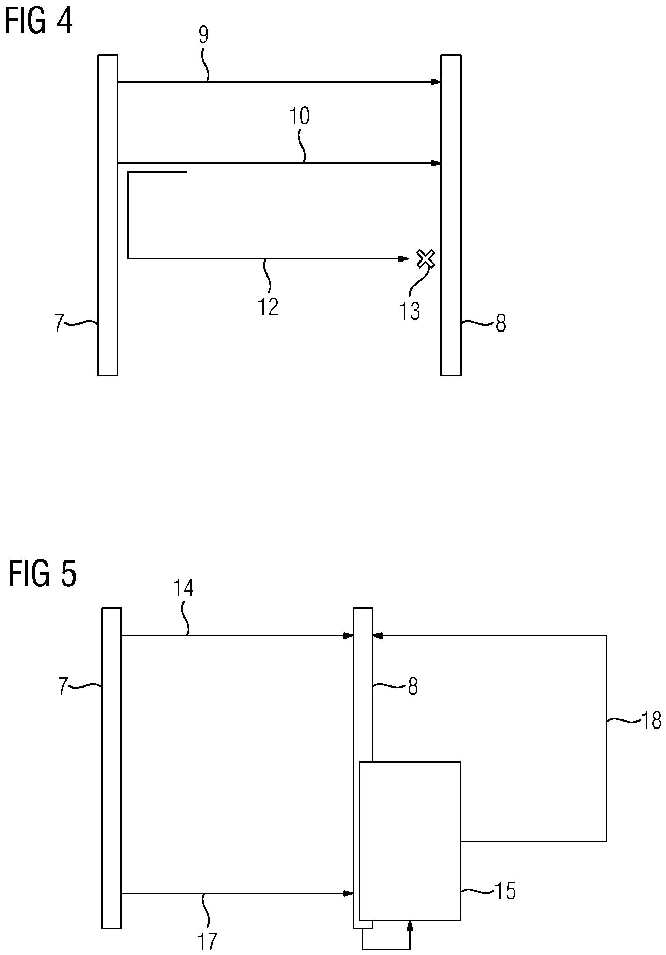

In der FIG 4 ist rein schematisch und beispielhaft ein Gerät oder Trigger durch einen mit dem Bezugszeichen 7 versehenen Balken angedeutet und ein zugehöriger Netzwerkpfad (der durch einen oder mehrere Knotenpunkte 2 definiert ist) durch einen gegenüberliegenden, mit dem Bezugszeichen 8 versehenen Balken. Ein von dem Gerät bzw. Trigger 7 zu dem Netzwerkpfad 8 weisender Pfeil 9 deutet den Befehl der Ressourcen-Reservierung für die Einrichtung eines Streams an. Ein weiterer Pfeil 10 von dem Gerät bzw. Trigger 7 zu dem Netzwerkpfad 8 symbolisiert die Datenkommunikation unter Verwendung des reservierten Streams 6.

Es kann es vorkommen, dass einer oder mehrere Netzwerkteilnehmer vorübergehend vom Netz genommen und/oder deaktiviert werden. Dies kann beispielsweise auf eine Wartung und/oder einen zu behebenden Defekt zurückzuführen sein.

In diesem Fall wird eine Kommunikation temporär nicht mehr benötigt, da entweder das Gerät nicht mehr sendet und/oder keine Daten mehr abnimmt. Vorliegend werden von dem Gerät 4 keine Daten mehr abgenommen.

In demjenigen Falle, dass ein entferntes bzw. deaktiviertes Gerät einen Stream-Teilnehmer darstellt und die Ressourcen-Reservierung auf dem zugehörigen Netzwerkpfad aufrecht erhalten bleibt, kann die Bandbreite bei Verwendung von TAS und eines exklusiven Zeitfensters für den Stream nicht anderweitig genutzt werden, was zu einem Ausbremsen des gesamten Netzwerkes führt. Würde der Stream hingegen gelöscht, wären die reservierten Ressourcen zwar wieder verfügbar. Sobald der nur temporär entfernte bzw. deaktivierte Netzwerkteilnehmer wieder verbunden bzw. aktiviert wird, müsste jedoch eine komplett neue Konfiguration erfolgen, und eine rückwirkungsfreie Wiederinbetriebnahme kann nicht garantiert werden.

In der FIG 2 ist - rein schematisch - das Trennen des Gerätes 4 von dem Netzwerk durch einen Pfeil 1 verdeutlicht.
In der FIG 4 ist durch einen dritten, umgelenkten Pfeil 12 und ein Kreuz 13 angedeutet, dass von dem vorübergehend entfernten und/oder deaktivierten Gerät keine Daten mehr gesendet und/oder empfangen werden.

Um eine optimale Nutzung von Netzwerkressourcen insbesondere auch in dem Falle zu ermöglichen, dass an einen oder mehrere Stream-Teilnehmer vorrübergehend keine Daten gesendet und/oder von diesem oder diesen vorübergehend keine Daten empfangen werden (können), ist erfindungsgemäß ein Sleep-Mode vorgesehen.

Konkret werden, das einen Stream-Teilnehmer bildende Gerät 4 das Senden und/oder Empfangen von Daten über den Stream 6 unterbricht, die Ressourcen, die für das Gerät 4 an sämtlichen Knotenpunkten, vorliegend Bridges 2, auf dem Netzwerkpfad zwischen der SPS 1 und dem Gerät 4 reservierten sind, zur Nutzung für eine Datenübertragung, der eine niedrigere Priorität als der Datenübertragung über den Stream 6 zukommt, freigegeben.

Dabei bleibt die Reservierung der Ressourcen für das Gerät 4 an den drei Knotenpunkten 2 zwischen der SPS 1 und dem Gerät 4 - trotz der Freigabe für die niederpriore Nutzung und während einer etwaigen Nutzung der Ressourcen für eine niederpriore Kommunikation- aufrechterhalten. Die Reservierung wird also nicht abgebaut. Konkret bleiben an allen drei Knotenpunkten 2 zu der Reservierung gehörige Konfigurationseinstellungen gespeichert, vorliegend der Adresseintrag in der FDB, die Verwaltung der für Echtzeitdaten verwendeten Queue-Speicher und die notwendige Konfiguration des Shapers bzw. des TAS Mechanismus. Bei Verwendung von IEEE 802.1 CB müssen zusätzlich die benötigten Filter zur Erkennung der Stream-Daten und die Erkennung von Duplikaten benötigte Historie zum Speichern der zuvor empfangenen Sequenznummern in den Bridges vorhanden sein.
Zur Aktivierung des Sleep-Modus kann das Gerät 4 an den nächsten Knotenpunkt 2 die Sleep-Eigenschaft eines Streams direkt in einer erweiterten Stream Beschreibung senden, als Benachrichtigung in einer erweiterten Stream Beschreibung senden, als Benachrichtigung in einer Sleep-Mode-Nachricht, oder es kann von einer zentralen Stelle im Management der Netzwerkkomponente 2 die Einstellung für den Stream vorgenommen werden bzw. eine Nachricht an die Bridge 2 gesendet werden.

In der FIG 5 ist dies - erneut rein schematisch - angedeutet, konkret ist das Senden der Sleep-Nachricht an den nächsten Knotenpunkt 2 auf dem Netzwerkpfad 8 zwischen SPS 1 und Gerät 4 durch einen Pfeil 14, welcher von dem in der FIG links befindlichen, ein Gerät bzw. einen Trigger repräsentierenden Balken 7 zu dem den Netzwerkpfad repräsentierenden Balken 8 weist. In dem Sleep-Modus, welcher durch eine mit der Bezugsziffer 15 versehenes Blockelement angedeutet ist, werden die Ressourcen zur niederprioren Nutzung zur Verfügung gestellt, während die Reservierung jedoch erhalten bleibt.

Die freigegebenen Ressourcen an den drei Knotenpunkten 2 auf dem Netzwerkpfad 8 werden bei dem dargestellten Ausführungsbeispiel für eine Übertragung von Daten von der SPS 1 an den Bildschirm 3 und das Analysegerät 5 genutzt, wobei Letzteres aufgrund der Pfadgeometrie nur die Ressourcen von zwei der drei Knotenpunkten 2 nutzt, der Bildschirm 3 hingegen von allen Drei Knotenpunkten 2 (vgl. Figuren 1 bis 3).

Nachdem beispielsweise eine Wartung des entfernten Gerätes 4 abgeschlossen wurde, wird das Gerät 4 wieder mit dem Netz verbunden, was schematisch in der FIG 3 angedeutet ist, darin durch einen Pfeil 16.

Sobald das Gerät 4 wieder mit dem Netz verbunden ist, sendet es eine Wake-Up-Nachricht an die drei Knotenpunkte 2 auf dem Netzwerkpfad 8, der die SPS 1 mit dem Gerät 4 verbindet.

Das Senden der Wake-Up-Nachricht ist in der FIG 5 durch einen Pfeil 17 von dem Balken 7 zu dem Balken 8 angedeutet. In Reaktion auf die Wake-Up-Nachricht wird eine etwaige Datenübertragung mit einer niedrigeren Priorität unter Nutzung der für den wenigstens einen Teilnehmer des Streams reservierten Ressourcen beendet und den Teilnehmern wird die wieder aktive Reservierung signalisiert. Durch die zuvor bereitgestellten Ressourcen wird sichergestellt, dass die zuvor durchgeführte Reservierung wieder genug Ressourcen in den Knotenpunkten 2 zur Verfügung hat.

Das Gerät 4 führt dann das Empfangen von Daten von der SPS 1 über den Stream 6 fort, ohne dass die Reservierung von Ressourcen für den Stream 6 neu berechnet und/oder neu durchgeführt wird. Die erfindungsgemäß während des Sleep-Modes aufrecht erhaltenen Reservierungen an den drei Knotenpunkten 2 stehen dadurch quasi sofort, insbesondere nach nur einer oder einigem ms, wieder zur Verfügung.

Die Wiederherstellung der Datenkommunikation ist in der FIG 5 durch einen Pfeil 18 dargestellt, welcher von dem den Sleep-Modus repräsentierenden Blockelement 15 zu dem Netzwerkpfad zeigt.

Es sei angemerkt, dass die in den Figuren 1 bis 3 dargestellten Komponenten Teil einer Ausführungsform einer erfindungsgemäßen Vorrichtung darstellen können, die dann insbesondere wiederum einen Teil einer Automatisierungsanlage bildet.

Die erfindungsgemäße Vorgehensweise ermöglicht es, dass vorübergehend nicht benötigte, für einen Stream reservierte Ressourcen einer anderweitigen Nutzung zugeführt werden können, so dass eine optimale Nutzung vorhandener Netzwerkressourcen erfolgen kann, wobei gleichzeitig im Anschluss an eine vorübergehende Nicht-Nutzung eines Streams die Ressourcen ohne Verzögerung garantiert wieder für den Stream-Verkehr zur Verfügung stehen. Dies unter der Akzeptanz, dass die niederpriore Kommunikation in diesem Moment ggf. gestört wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Beispielsweise versteht sich, dass, auch wenn der erfindungsgemäße Sleep-Modus im Rahmen des vorstehenden Ausführungsbeispiels für einen Stream 6 mit zwei Stream-Teilnehmern 1, 4 beschrieben wurde, dieser für den Fall, dass in einem Netzwerk zwei oder mehr Streams eingerichtet sind von denen eine Stream-Teilnehmer vorübergehend keine Daten über den Stream sendet und/oder empfängt, für zwei oder mehr Streams aktiviert werden kann.

Auch kann der erfindungsgemäße Sleep-Modus selbstverständlich zum Einsatz kommen, wenn von einem Stream mit mehr als zwei Stream-Teilnehmern ein Teilnehmer vorübergehend nicht sendet und/oder empfängt oder auch mehrere Teilnehmer vorübergehend nicht senden und/oder empfangen.

Schließlich muss klar sein, dass die im Rahmen des vorstehend beschriebenen Ausführungsbeispiels durch eine SPS 1 und ein Gerät 4 mit Aktoren gegebene wenigstens zwei Stream-Teilnehmer nur beispielhaft gewählt sind und Stream-Teilnehmer, für welche gemäß der vorliegenden Erfindung ein Sleep-Modus eingerichtet wird, auch in Form von beliebigen anderen Geräten vorliegen können.

## Patentansprüche

1. Verfahren zur Daten-Kommunikation in einem insbesondere industriellen Netzwerk, bei dem zwischen wenigstens zwei Stream-Teilnehmern (1, 4) ein Stream (6) eingerichtet wird, wobei an einem oder mehreren zwischen den wenigstens zwei Stream-Teilnehmern (1, 4) liegenden Knotenpunkten, insbesondere Bridges (2) und/oder Switches, Ressourcen reserviert und anschließend Daten zwischen den wenigstens zwei Stream-Teilnehmern (1, 4) über den Stream (6) übertragen werden,
**dadurch gekennzeichnet, dass**
wenigstens ein Teilnehmer (4) des Streams (6) das Senden und/oder Empfangen von Daten über den Stream (6) unterbricht und Ressourcen, die für den wenigstens einen Teilnehmer (4) des Streams (6) an einem oder mehreren Knotenpunkten (2) reservierten sind, zur Nutzung für eine Datenübertragung, der eine niedrigere Priorität als der Datenübertragung über den Stream (6) zukommt, freigegeben werden, wobei die Reservierung der Ressourcen für den wenigstens einen Teilnehmer (4) aufrecht erhalten wird.

2. Verfahren nach Anspruch 1,
**dadurch gekennzeichnet, dass**
der wenigstens eine Teilnehmer (4) des Streams (6) im Anschluss daran, dass er das Senden und/oder Empfangen von Daten über den Stream unterbrochen hat, das Senden und/oder Empfangen von Daten über den Stream unter Nutzung der für ihn reservierten Ressourcen fortführt, wobei eine etwaige Datenübertragung mit einer niedrigeren Priorität unter Nutzung der für den wenigstens einen Teilnehmer des Streams reservierten Ressourcen beendet wird.

3. Verfahren nach Anspruch 2,
**dadurch gekennzeichnet, dass**
der wenigstens eine Teilnehmer (4) des Streams (1) das Senden und/oder Empfangen von Daten über den Stream (6) fortführt ohne dass die Reservierung von Ressourcen für den Stream (6) neu berechnet und/oder neu durchgeführt wird.

4. Verfahren nach einem der vorhergehenden Ansprüche,
**dadurch gekennzeichnet, dass**
von wenigstens einem weiteren Teilnehmer (3, 5) des Netzwerkes die freigegebenen Ressourcen für eine Datenübertragung, der eine niedrigere Priorität als der Datenübertragung über den Stream zukommt, genutzt werden.

5. Verfahren nach einem der vorhergehenden Ansprüche,
**dadurch gekennzeichnet, dass**
der wenigstens eine Teilnehmer (4) des Streams (6) deaktiviert wird und insbesondere aufgrund der Deaktivierung von dem wenigstens einen Teilnehmer (4) des Streams (6) keine Daten mehr über den Stream (6) gesendet und/oder empfangen werden, und/oder der wenigstens eine Teilnehmer (4) des Streams (6) von dem Netzwerk getrennt wird und insbesondere aufgrund der Trennung von dem Netzwerk von dem wenigstens einen Teilnehmer (4) des Streams (6) keine Daten mehr über den Stream (6) gesendet und/oder empfangen werden.

6. Verfahren nach Anspruch 5,
**dadurch gekennzeichnet, dass**
der der wenigstens eine Teilnehmer (4) des Streams (6) von dem Netzwerk getrennt wurde und im Anschluss daran wieder mit dem Netzwerk verbunden wird, und/oder dass der wenigstens eine Teilnehmer (4) des Streams (6) deaktiviert wurde und im Anschluss daran wieder aktiviert wird.

7. Verfahren nach einem der vorhergehenden Ansprüche,
**dadurch gekennzeichnet, dass**
der wenigstens eine Teilnehmer (4) des Streams (6) vor oder nach oder gleichzeitig zu der Unterbrechung des Sendens und/oder Empfangens von Daten über den Stream (6) eine Sleep-Nachricht (14) sendet und in Reaktion auf die Sleep-Nachricht (14) die Ressourcen, die für den wenigstens einen Teilnehmer (4) des Streams (6) an einem oder mehreren Knotenpunkten (2) reservierten sind, zur Nutzung für eine Datenübertragung, der eine niedrigere Priorität als der Datenübertragung über den Stream (6) zukommt, freigegeben werden.

8. Verfahren nach einem der vorhergehenden Ansprüche,
**dadurch gekennzeichnet, dass**
der wenigstens eine Teilnehmer (4) des Streams (6) im Anschluss daran, dass er das Senden und/oder Empfangen von Daten über den Stream (6) unterbrochen hat, eine Wake-Up-Nachricht (17) sendet, und in Reaktion auf die Wake-Up-Nachricht (17) eine etwaige Datenübertragung mit einer niedrigeren Priorität unter Nutzung der für den wenigstens einen Teilnehmer (4) des Streams (6) reservierten Ressourcen innerhalb einer vorgegebenen Zeitspannen beendet wird.

9. Verfahren nach Anspruch 6 und 8,
**dadurch gekennzeichnet, dass**
der wenigstens eine Teilnehmer (4) des Streams (6) die Wake-Up-Nachricht (17) sendet, nachdem er wieder mit dem Netzwerk verbunden wurde, und/oder dass der wenigstens eine Teilnehmer (4) des Streams (6) die Wake-Up-Nachricht (17) sendet, nachdem er wieder aktiviert wurde.

10. Verfahren nach einem der vorhergehenden Ansprüche,
**dadurch gekennzeichnet, dass**
der wenigstens eine Teilnehmer (4) des Streams (6), wenn er Daten über den Stream (6) endet und/oder empfängt zusätzlich zyklisch Keep-Alive-Nachrichten sendet, und der wenigstens eine Teilnehmer (4) des Streams (6) insbesondere das Senden von Keep-Alive-Nachrichten beendet, wenn er das Senden und/oder Empfangen von Daten über den Stream (6) unterbricht

11. Verfahren nach einem der vorhergehenden Ansprüche,
**dadurch gekennzeichnet, dass**
die Reservierung der Ressourcen für den wenigstens einen Teilnehmer (4) des Streams (6) aufrecht erhalten wird, indem an einem oder mehreren Knotenpunkten (2) zu der Reservierung gehörige Konfigurationsdaten und/oder Konfigurationseinstellungen gespeichert bleiben.

12. Verfahren nach einem der vorhergehenden Ansprüche,
**dadurch gekennzeichnet, dass**
die Übertragung von Daten über den Stream (6) in einem AVB oder TSN-Netzwerk erfolgt.

13. Verfahren nach einem der vorhergehenden Ansprüche,
**dadurch gekennzeichnet, dass**
es sich bei dem wenigstens einen Teilnehmer (4) des Streams (6) um eine Komponente einer industriellen Automatisierungsanlage handelt, die bevorzugt wenigstens einen Sensor und/oder wenigstens einen Aktor umfasst oder dadurch gebildet wird.

14. Steuerungsverfahren für einen industriellen technischen Prozess oder ein Fahrzeug, bei dem zwischen wenigstens zwei Komponenten (1, 4) einer Automatisierungsanlage Daten unter Durchführung des Verfahrens nach einem der vorhergehenden Ansprüche ausgetauscht werden und auf Basis der ausgetauschten Daten eine Steuerung des industriellen technischen Prozesses oder Fahrzeugs erfolgt.

15. Vorrichtung, die zur Durchführung des Verfahrens nach einem der Ansprüche 1 bis 14 ausgebildet und eingerichtet ist, insbesondere umfassend:
- einen oder mehrere Knotenpunkte, insbesondere Bridges (2) und/oder Switches, und
- wenigstens zwei Stream-Teilnehmer bildende Geräte (1, 4), die über einen oder mehrere Knotenpunkte (2) miteinander verbunden sind, wobei die wenigstens zwei Stream-Teilnehmer bildenden Geräte (1, 4) bevorzugt Bestandteile einer industriellen Automatisierungsanlage sind.

16. Computerprogramm umfassend Programmcode-Mittel zur Durchführung des Verfahrens nach einem der Ansprüche 1 bis 14.

17. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 14 durchzuführen.
